# EUROPEAN PATENT APPLICATION

(11) **EP 1 495 882 A1**
(43) Date of publication of application: **12.01.2005**
(21) Application number: 04103126.1
(22) Date of filing: 02.07.2004
(51) Int. Cl.: B60C 11/03, B60C 11/00, B60C 113/00

(54) **TREAD NOISE IMPROVEMENT BY MODULATING GROOVE RESONANCE FREQUENCY**

(30) Priority: 07.07.2003 US 614617
(71) Applicant: THE GOODYEAR TIRE & RUBBER COMPANY, Akron, Ohio 44316-0001 (US)
(72) Inventor: RICHARDS, Timothy Robert, 44333, Fairlawn (US); BURNWORTH, Kevin Lee, 44221, Cuyahoga Falls (US); Danforth III, Robert John, Sheboygan/ Wi 53081 (US); SONG, Tao, 44236, Hudson (US); SUNDKVIST, Karl Eric, 44313, Akron (US)
(74) Representative: Kutsch, Bernd

(57) **Abstract**

A tire (10) has a plurality of shoulder tread elements (50) defined by lateral grooves (17A, 17B) and circumferential grooves (15). The tread (12) of the tire (10) is pitched using three or more pitch sizes. Each pitch has a lateral groove (17a) open to the adjacent circumferential groove (15) or closed to the adjacent circumferential groove (15) as a function of a predetermined sequence of non-uniformity.

## Description

### Background of the Invention

This invention relates to a tread for a pneumatic tire, more particularly a tread having two rows of shoulder block elements or lugs, each lug being separated by a lateral extending groove. These tires are generally used on passenger or light truck vehicles, some of which are commonly called all-season tires. While, alternatively, the design can be used on any tread, including snow tires or any other tread having tread lugs in the shoulder region of the tread, each lug being separated by a lateral groove.

A primary concern of tire designers is tire noise and how to reduce tread generated noise. Audible sounds are created as the tire travels upon a surface. A tire designer must select a tread design that reduces harsh disagreeable sounds and avoids annoying the driver of the vehicle.

Sounds that are generated by a rotating tire contacting the road surface are a form of energy transmission. When the energy transmitted is in a narrow frequency range the sound generally will be dominated by a single peak frequency. Such a tire will have a tonality, tonality being a sound generated with energy concentrated over a narrow range of the sound frequency spectrum.

To avoid tread patterns that in use generate undesirable sound characteristics resulting from dominate frequencies, various methods have been suggested that spread the energy produced over a wide frequency range. The most commonly accepted method relates to avoiding repetitive characteristics of the tread pattern. This method entails varying the circumferential length of design features that are repeated over the circumferential length of the tire tread. This method of modulating or varying the repetitive pattern is commonly known as pitching as is discussed in US-A- 4,474,223.

EP-A- 0 114 594 discloses an asymmetric tread for a tire. The tread has two sets of pitches, one set being on each side or half of the tread the pitches being circumferentially continuous about the tread in differing by pitch sequence and a total number of pitches on each side of the tread. This prior art method was a way of achieving an additional ability to modulate the high frequency peaks of the pitching. Later pitching concepts have involved the use of pitches in excess of 100 pitches. This type of noise pitching is very costly, requires a large number of varying sizes around the tread pattern and complicates mold design.

In EP-A- 0 524 568 an asymmetric tire having two pitch boundaries that differ from each other is employed wherein the number of pitches vary between the two distinct sets of pitches and each pitch boundary is defined by either a non-linear or angularly inclined pitch boundary. These types of noise reducing pitch designs further complicate the mold design and while doable increase tooling cost. It is an object of the present invention to provide a tire wherein the ability of the tread to spread the sound energy generated during tire use over a wide spectrum is enhanced while at the same time simplifying the techniques commonly used in pitching.

### Summary of the Invention

A tire has a casing and a tread. The tread has a plurality of tread elements defined by grooves. The grooves include generally laterally extending grooves and circumferentially extending grooves.

The tire has at least three distinct pitch sizes, for instance small, medium and large (S, M, L), repeated around the tread. Each pitch has at least one lateral groove extending from the tread shoulder axially inwardly toward a circumferentially extending groove, the lateral grooves are open or closed relative to the adjacent circumferential groove according to a predetermined sequence of non-uniformity. In one embodiment of the invention at least one lateral groove within a pitch opens into a circumferential groove in each of two or more pitch sizes. One or more pitch sizes has the at least one lateral groove which is blocked from the circumferential groove. The blocking of the lateral groove preferably occurs adjacent the circumferential groove. Alternatively the blockage can occur anywhere along the length of the lateral groove.

The at least one lateral groove is located adjacent a leading edge and a trailing edge of an adjacent tread element in a shoulder of the tread. The pitching can occur in four pitch sizes, small, medium₁, medium₂ and large. In that embodiment the at least one lateral groove is open to an adjacent circumferential groove in each of the pitches of one or more, preferably two of the pitch sizes and is closed to the adjacent circumferential groove in each of one or more, preferably two pitches of the remaining pitch sizes. It is preferable that the total number of pitches is in the range of 60 to 120 pitches. The pitch sizes, small, medium₁, medium₂ and large may have pitch ratios of 7, 8, 9 and 10, respectively, the pitch ratio being the relative size difference between the pitches.

As the tire rotates, the noise generated at the edges of the tire's footprint or contact patch transmits through the hollow circumferential groove void and is acted on by the pitched tire groove network. By blocking off lateral grooves based on pitch size, the groove network changes as the tire rotates and tonality is reduced and the peak frequencies are flattened such that the tire noise generally is much improved. This concept is similar to putting one's finger over a flute and is referred to herein as a fluted tire reduction of groove resonance tonality.

### Definitions

"Axial" and "axially" are used herein to refer to lines or directions that are parallel to the axis of rotation of the tire.

"Circumferential" means lines or directions extending along the perimeter of the surface of the annular tread perpendicular to the axial direction.

"Crown" refers to that portion of the tire within the width area of the tread in the vicinity of the tread.

"Design feature" includes enough of the tread pattern to constitute at least one lug or block element.

"Equatorial plane" refers to the plane perpendicular to the tire's axis of rotation and passing through the center of its tread. "Shoulder" refers to the upper portion of sidewall just below the tread edge.

"Footprint" refers to the contact patch or area of contact of the tire tread with a flat surface at zero speed and under normal load and pressure or under specified load, pressure and speed conditions.

"Global treadwear" refers to normal treadwear, generally evenly distributed around a tire.

"Irregular treadwear" refers to uneven patterns of wear, sometimes localized on a single lug where one side of a lug wears faster than another.

"Lateral Edge" means the axially outermost extremes of the tread.

"Lugs" or "block element" refers to radial rows of discontinuous rubber tread rubber elements that make direct contact.

"Pitch" means a single occurrence of a design feature repeated around the circumference of a tread.

"Pitch Boundary" means one of the circumferential extremes of a single pitch.

"Pitch length" means the circumferential length of a single pitch.

"Radial" and "radially" are used to mean directions radially toward or away from the axis of rotation of the tire.

### Brief Description of the Drawings

Figure 1 is a plan view of a tire having a tread made in accordance with the present invention.
Figure 1A is an enlarged fragmentary plan view of the tread pattern of Figure 1.
Figures 2A through 3A show the footprint schematics of the tire of the present invention.
Figures 4A through 5A show footprint schematics of the prior art tires.

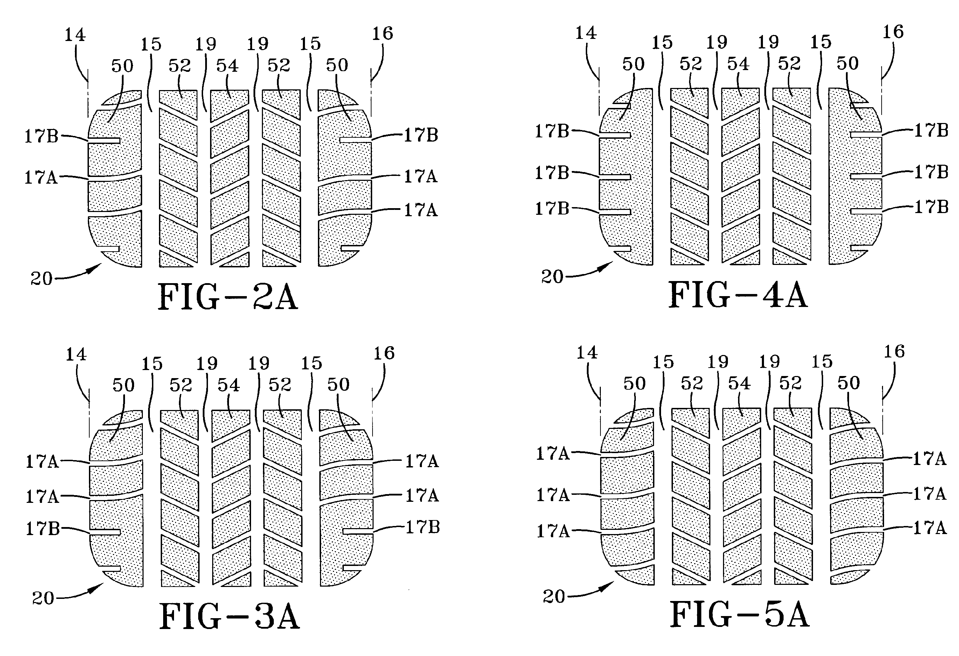

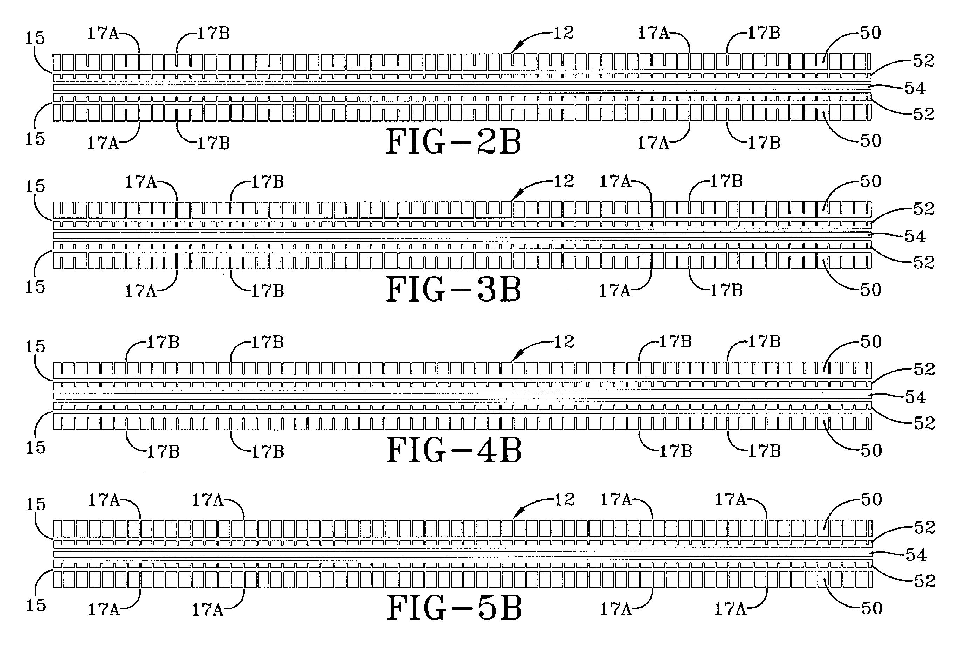

Figures 2B through 5B illustrate the entire 360° of an exemplary schematic pitch sequence of the tread shoulders taken from Figures 2A through 5A.

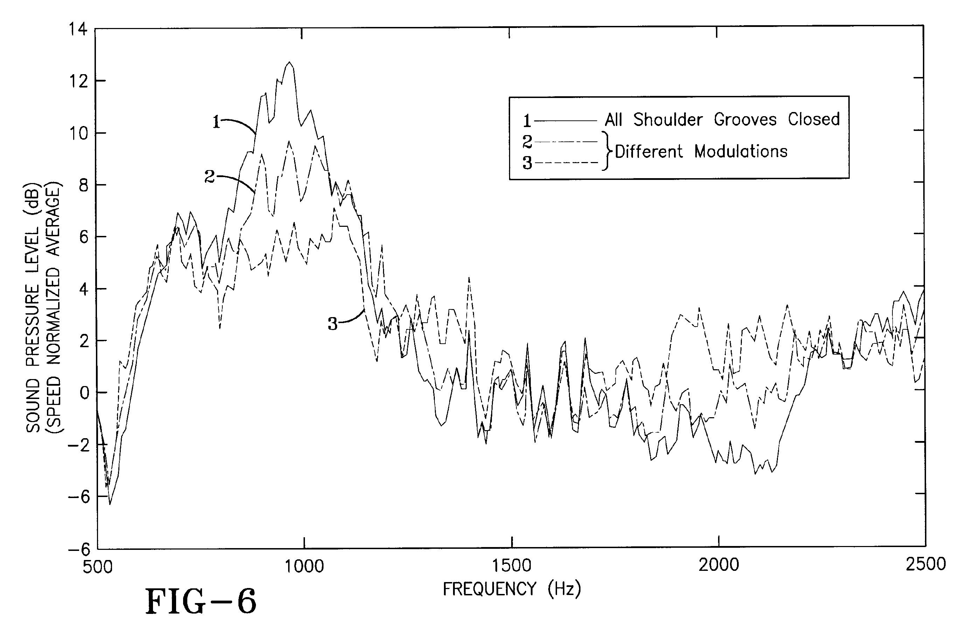

Figure 6 is a chart showing the sound pressure level in decibels and speed based on normalized average versus frequency depicting representative schematic footprints of the present invention.

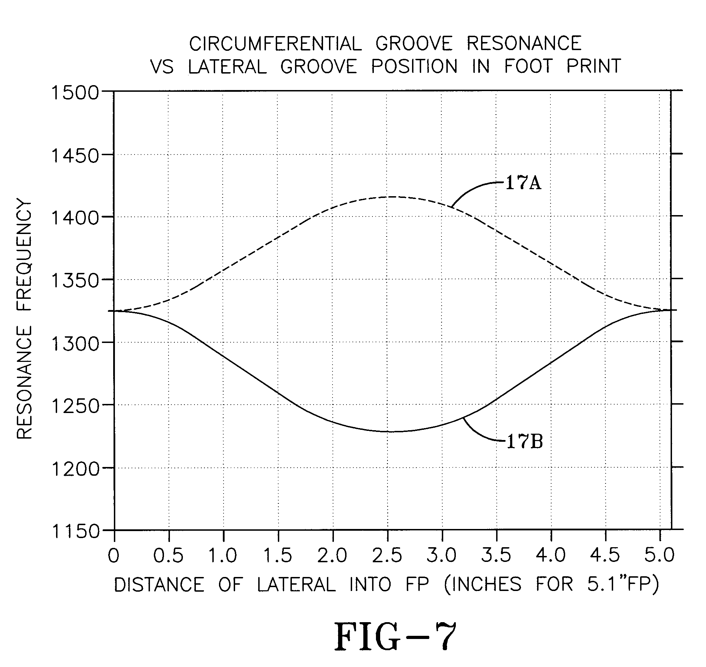

Figure 7 is a chart showing the groove resonance frequency of open and closed lateral grooves as they move through the contact patch.

### Detailed Description of the Invention

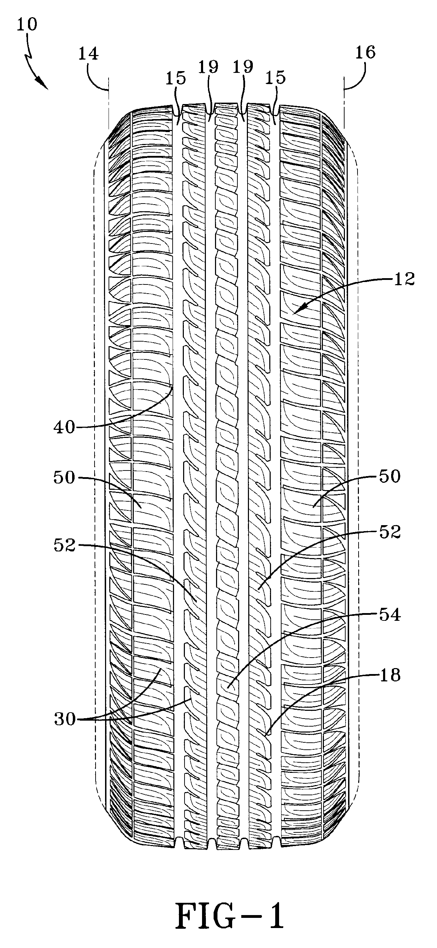

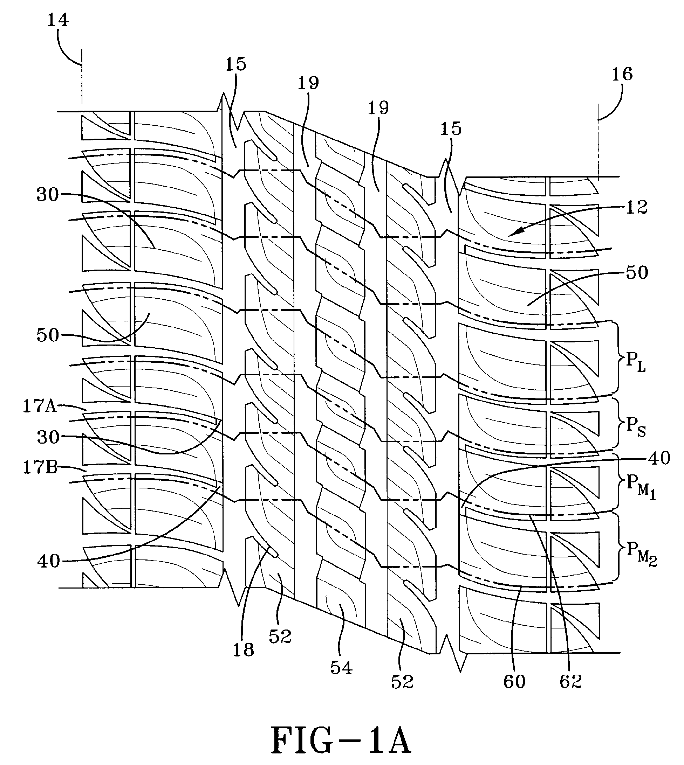

In Figure 1, an exemplary tread 12 according to the present invention is illustrated. The tread 12 when configured angularly as when attached to a tire 10 is adapted to rotate about an axial R.

The tread 12 extends circumferentially about a tire 10. The tread 12 extends laterally between a first and second lateral edge 14 and 16, respectively. The tread 12 has a plurality of road contacting relief elements hereinafter called tread elements 50. The tread elements 50 are positioned on the tread in a pattern commonly referred to as the tread pattern. The tread elements 50 are separated by grooves 15, 17a, 17b, 18 and 19.

The tread elements 50 are defined by circumferential grooves 15, 19 and lateral grooves 17a, 17b, 18. The center of the tread can have relief elements that can include circumferential ribs 52, 54. Typically a rib 52, 54 may be a zigzag configuration, straight or sinusoidal in shape. Whether the tread elements 50 are block elements or a combination of block elements and ribs, there exists a generally repeating pattern of design features. This repeating pattern is commonly called a pitch P.

A pitch is a single occurrence of a design feature repeated circumferentially around a tread. Typically each pitch P has a size defined by a specific circumferential length between repeating design features, the length commonly being known as a pitch length.

Variation of the pitch lengths around the circumference of the tread is possible to improve the noise generated by the tire during normal use. The variation and arrangement of lengths of pitch surround the circumference of the tread is disclosed as the pitch sequence. The pitch lengths establish the number of pitches P that may be employed around the tread. Typically passenger tires have about 30 to 120 pitches, preferably from 40 to 80. For a given pitch P in a pitch sequence, the pitch ratio for such pitch is the ratio of its pitch length to the length of the shortest pitch in the sequence. The pitch ratio of the longest pitch to the shortest pitch for passenger tires is typically between 1.14 and 1.86.

Airborne tire noise generated within the tread near the contact patch may be modified by acoustic resonances of the void network created by the grooves of the tread design within the contact patch 20. The filtering effect of the void network acts to amplify noise near the network resonance frequencies. This may make the noise particularly loud and annoying when noise generation frequencies match void resonance frequencies. This invention seeks to reduce the effect of the void network by modulating the resonance frequencies.

In tire design, tread blocks 50 and the lateral grooves 17a, 17b that separate them are known generators of noise. As the tire rotates, these tread design elements enter and leave contact with the road creating signature noise pulses. If all design pitches P are of equal size a tonal noise is created at frequencies proportional to the tire rotation rate (speed) of the tire as a result of the regular occurring events created by having all the pitches of the same size. This annoying tonal noise may be reduced by employing different size pitches in a sequence to mix up the noise pulse event timing of noise generation, thereby smearing the sound energy over a range of frequencies and reducing the tonality of the generated tire noise.

Another aspect of the tire noise system is the acoustic resonance of the air space void network in the tire contact patch 20 coupled with the surrounding air. In many tire designs employing ribs 52, 54, this void resonance is comprised primarily of the tubes created by the circumferential grooves 15, 19 of the tire sealed by the road surface within the tire contact patch 20. The acoustic resonance of these tubes formed by the circumferential grooves 15, 19 is often dominated by their length. The length of the circumferential groove 15, 19 while in the contact patch and the end impedances of the acoustic horns created by the tire and the road surfaces are the dominant features creating this acoustic resonance. Lateral grooves 17a, 17b, 18 in the adjacent ribs 50, 52, 54 which intersect the circumferential grooves act as acoustic branches. The effect of an open-ended branch, a lateral groove 17a which connects the circumferential groove 15 to the air space at the side of the tire is to increase the resonance frequency of the tube/branch network. The amount of resonance frequency increase depends upon the circumferential position of the branch or lateral groove 17a along the tube or circumferential groove, the maximum occurs when the branch or lateral groove 17a is at the middle of the tube as shown in Figure 7. This increase is resonance frequency is also dependent on the tube/branch lengths and the cross-sectional areas of the groove voids. A closed end branch or lateral dead ended groove 17b that extends off of the circumferential groove 15 acts to decrease the resonance frequency in a similar manner dependent upon the position and geometry of the grooves within the contact patch. As a tire turns and the lateral groove or branch 17a, 17b moves through the contact patch 20, the branch or lateral groove position will modulate the resonance frequency resulting in a smearing of the resonance. However, in most passenger tire designs, there are several pitches P in the contact patch 20 at one time. The compound effect of several lateral grooves or branches along the circumferential groove is to change the resonance frequency, but modulation range is reduced because at any time there is a most effective branch near the mid-length position of the circumferential groove 15 or tube. The branch geometry within the contact patch 20 is effectively nearly uniform as the tire rotates as shown in Figures 4A and 5A..

A primary point of the present invention is to overcome this multiple pitch P within the contact patch as a function of the lateral groove geometry which generates its own near uniformity. Accordingly, it is desirous to eliminate this near uniformity of the lateral grooves 17a, 17b by varying the pitch to pitch tread design around the tire circumference. Any branch or lateral groove 17a, 17b extending from a circumferential groove 15 may be dead ended acoustically by applying a full height tire tie bar 40 or other means of blockage at any position that will pass within the contact patch 20. The most effective frequency reducing occurs if the dead end is applied or tie bar 40 is applied at a maximum distance from the circumferential groove 15. Alternatively, a full height tire bar 40 adjacent to the circumferential groove 15 will eliminate the lateral groove 17b as a branch from an acoustic point of view.

Accordingly, the greatest modulation of frequencies would occur if at any different time all lateral grooves 17a within the contact were open ended or at other times all the lateral grooves 17b within contact were closed and the closure or blockage occurred at a maximum length or distance from the circumferential groove 15.

This effect could be accomplished by alternating adjacent groups of pitches P with open ended or dead ended lateral grooves, the dead ends preferably being as far as possible along the lateral distance from the circumferential groove but still within the contact patch. For most contact patch groups of 3 to 12 consecutive pitches of open lateral grooves 17a alternating with groups of 3 to 12 consecutive pitches of closed lateral grooves 17b in a repeating pattern is a satisfactory non-uniform predetermined sequence. It is noted large groups of open or closed lateral grooves may produce slowly varying hints of noticeable modulation or may impact uniformity of other aspects of tire performance. Although other combinations of branch sequencing could be employed the design utilized in one embodiment of the invention used a practical approach which was coupled to the tread design pitch sequencing and utilized opening and closing the branches or lateral grooves 17a, 17b by the use of full height tire bars 10 adjacent to the circumferential grooves 15 as a function of pitch size. This approach is very efficient for the manufacturer of the molds and has minimum impact on other performance aspects of the tire.

For the purpose of clarification, the term passenger tire 10 is intended to include tires for passenger vehicles and light trucks having a tread with a net gross ratio in the range of 50 to 80%. The tread 12 illustrated in Figure 1 has a net to gross ratio of approximately 64%. The tread 12 as further illustrated in Figure 1A has pitches extending from a first lateral edge 14 through the central portion of the tread 12 to the second lateral edge 16. According to the present invention each pitch has first and second pitch boundaries. These pitch boundaries define the circumferential extent of a pitch, the first and second pitch boundaries for the pitch P being designated 60, 62. The pitch boundaries as illustrated extend across the tread 12 in a nonlinear fashion. In some tires, the treads 12 may have the pitch boundaries 60, 62 extending 90° to the circumferential direction and changing simply in circumferential length. Alternatively, as illustrated in Figure 1A, these pitch boundaries may follow an irregular pattern along the block edges and follow some of the lateral grooves traversing along the tread pattern. Nevertheless, as illustrated each of the pitches P when stacked against the other one form a uniform and cohesive tread pattern albeit of different circumferential lengths. In the exemplary tire as illustrated in Figures 1 and 1A four pitch lengths are shown having relative sizes 7, 8, 9 and 10 as illustrated.

With reference to Figures 2A through 5A and corresponding Figures 2B through 5B, exemplary schematic footprints and tread shoulder pitch patterns are illustrated. In Figure 4A a prior art tread footprint is shown wherein all the lateral grooves 17b are blocked from the circumferential grooves 15 in the shoulder region of the tread uniformly 360° around the tire. This pattern as illustrated in Figure 4A ensures that the circumferential grooves 15 along the shoulders are actually closed to the lateral edge 14, 16 over the shoulder. In Figure 5A a prior art tire having each of the lateral grooves 17a open to the circumferential groove 15 uniformly 360° around the circumference is illustrated. Generally tire tread patterns are symmetrical in that either all the grooves or every alternating groove is open and closed to a shoulder. This is true irrespective of the pitch size of the tread pattern and thus creates the uniform tonality issues earlier discussed.

With reference to Figures 2A and 3A, the tread pattern of the present invention is illustrated wherein the tread elements 50 in the shoulder rows have the lateral grooves 17a open or 17b closed relative to the circumferential grooves 15 as a function of the pitch size. In Figure 2A only the medium sized pitch M has the lateral groove 17b blocked from the circumferential groove 15, 19. In Figure 3A two of the lateral grooves 17b are blocked from the circumferential grooves 15 while two of the lateral grooves 17a are open to the circumferential grooves 15 based on respective pitch sizes. In some embodiments the exemplary pitch pattern may have three pitch sizes S, M, L whereas in others the footprint may have four pitch sizes PS, PM₁, PM₂ and PL as illustrated in the tire of Figure 1A.

For a better understanding of the invention the prior art tread pattern having all the lateral grooves 17b closed to the sides is shown about 360° rotation as illustrated in Figure 4B. Also, the prior art tire having all the lateral grooves 17a opened to the sides is illustrated in Figure 5B. In Figure 2A wherein the footprint has only one pitch size in the pitch sequence which has a lateral groove 17b closed to the side, this entire sequence is shown in Figure 2B. In Figure 3B two pitch sizes in the pitch sequence have the lateral grooves 17a opened to the side while the other two lateral grooves 17b within the other pitch sizes are closed to the circumferential grooves. Herein, when the term "closed to the circumferential groove" simply means that the lateral groove 17b does not intersect the adjacent circumferential groove 15. As illustrated, it is preferable that the non-intersection of the lateral groove 17b occur in close proximity to but not open to the circumferential grooves. This feature ensures that the noise generated by the long tube created by the circumferential groove is stopped right at the circumferential groove more preferably acoustically the blockage further extended toward the shoulder region of the tire. With this invention it is important to note that the lateral grooves 17a, 17b while being shown 90° to the circumferential direction may be inclined at any particular angle or may be curved as illustrated in Figure 1. The important part is that the lateral grooves 17a, 17b are opened or closed as a function of pitch size or some other non-uniform predetermined pitch sequence. When pitched tires are used in combination with shoulder or lateral grooves 17a, 17b that are opened or closed as a function of a predetermined non-uniform sequence such as pitch size, a great reduction in the peak frequencies generated by the tire as it rotates can be achieved. This is illustrated in Figure 6 wherein the first graph 1 shows all the lateral grooves 17b closed to the circumferential grooves 15 with a noticeable peak frequency as illustrated at approximately 1000 Hz. When modulating the lateral grooves 17a or 17b such that they open or close as a function of a predetermined non-uniform sequence such as the exemplary pitch size as done in examples 2A and 3A, a great reduction in the peak amplitude results and the curve looks as shown in Figure 6 graphs 2 and 3, respectively. It is believed that by using the combination of pitching of tires with open and closed lateral grooves in the shoulders is a way to greatly reduce the tonality generated. Greater design flexibility and noise reduction can occur.

With reference to Figures 1 and 1A, it is noted that the closed lateral grooves 17b have a small sipe or incision cut 30 into the tread 12 by a blade during the forming of the tire or molding of the tire. This small incision 30 is of no consequence, because as the tire enters a footprint the sipes or incisions 30 tend to close as the tire leaves the footprint the incisions 30 remain closed until exiting the footprint. As a result, the noise generated by the tire can be prevented. Alternatively, the blockage or tie bar 40 could be solid from one tread element 50 to the other. However, for wear purposes it is believed that an incision 30 is preferable to avoid the onset of irregular wear. These incisions 30 help increase the flexibility between the tread elements 50 and help prevent irregular shoulder wear.

## Claims

1. A tire having a casing and a tread (12), the tread (12) having a plurality of tread elements (50) defined by grooves, the grooves including generally laterally extending grooves (17A, 17B, 18) and circumferentially extending grooves (15, 19), the tire (10) being **characterized by** comprising pitches with at least three distinct pitch sizes repeated around the tread (12), wherein each pitch has at least one lateral groove (17A, 17B) extending from a tread shoulder axially inwardly and wherein the at least one lateral groove (17A) within a pitch opens into a circumferential groove (15) or the at least one lateral groove (17B) within a pitch is blocked from the circumferential groove (15) according to a predetermined sequence of non-uniformity.

2. The tire of claim 1, wherein the predetermined sequence of non-uniformity has the at least one lateral groove (17A) within a pitch opening into a circumferential groove (15) in each of two or more pitch sizes, and one or more pitch size has at least one lateral groove (17B) which is blocked from the circumferential groove (15).

3. The tire of claim 1 or 2, wherein the at least one lateral groove (17A, 17B) is located adjacent a leading edge and a trailing edge of adjacent tread elements (50) in a shoulder of the tread (12).

4. The tire of claim 1, wherein the tread (12) has four different pitch sizes (PS, PM₁, PM₂, PL).

5. The tire of claim 4, wherein the at least one lateral groove (17A, 17B) is open to adjacent circumferential groove (15) in each of the pitches of two of the pitch sizes and closed to the adjacent circumferential groove (15) in each of the pitches of the remaining two pitch sizes.

6. The tire of at least one of the previous claims, wherein the total number of pitches is in the range of 60 to 120.

7. The tire of at least one of the previous claims, wherein the pitch sizes (PS, PM₁, PM₂, PL) have pitch ratios of 7, 8, 9 and 10, respectively, the pitch ratios being the relative size differences between the pitches.

8. The tire of at least one of the previous claims, wherein the predetermined sequence of non-uniformity has groups of 3 to 12 consecutive pitches having open lateral grooves (17A) alternating with groups of 3 to 12 consecutive pitches of closed lateral grooves (17B) in a repeating pattern.

9. The tire of at least one of the previous claims, wherein a plurality of lateral grooves (17A, 17B, 18) blocked from a circumferential groove (15) have the blockage applied at a maximum distance from the circumferential groove (15) but within the contact patch.

10. The tire of at least one of the previous claims, wherein the at least one lateral groove (17B) within each pitch having been blocked, is blocked adjacent the circumferential groove (15).
